(19) **Europäisches Patentamt / European Patent Office / Office européen des brevets**

(11) **EP 1 067 365 B1**

(12) # EUROPÄISCHE PATENTSCHRIFT

(45) Veröffentlichungstag und Bekanntmachung des Hinweises auf die Patenterteilung:
**11.01.2017 Patentblatt 2017/02**

(51) Int Cl.:
**G01F 1/05** (2006.01)  **G01F 1/10** (2006.01)
**G01F 1/06** (2006.01)  **G01D 5/241** (2006.01)

(21) Anmeldenummer: **00113839.5**

(22) Anmeldetag: **30.06.2000**

(54) **Verfahren und Vorrichtung zur Bewegungsmessung durch kapazitives Abtasten**

Method and device for motion measurement by capacitive scanning

Procédé et dispositif de mesure du mouvement par balayage capacitif

(84) Benannte Vertragsstaaten:
**AT BE CH CY DE DK ES FI FR GB GR IE IT LI LU MC NL PT SE**

(30) Priorität: **09.07.1999 DE 19932041**

(43) Veröffentlichungstag der Anmeldung:
**10.01.2001 Patentblatt 2001/02**

(73) Patentinhaber: **Techem Energy Services GmbH
65760 Eschborn (DE)**

(72) Erfinder: **Hansing, Martin
65931 Frankfurt am Main (DE)**

(74) Vertreter: **Keil & Schaafhausen
Patent- und Rechtsanwälte PartGmbB
Friedrichstrasse 2-6
60323 Frankfurt am Main (DE)**

(56) Entgegenhaltungen:
**EP-A1- 0 551 066    US-A- 4 164 866
US-A- 4 324 144    US-A- 5 598 153**

**Beschreibung**

Die Erfindung betrifft ein Verfahren zur Messung der Bewegung eines strömenden Mediums durch kapazitives Abtasten eines beweglichen Schaltelementes, wobei das dielektrische oder elektisch leitende Schaltelement angetrieben von der zu messenden Bewegung des strömenden Mediums periodisch durch eine Messanordnung hindurchgeführt wird und dadurch eine Kapazitätsänderung bewirkt und wobei die Kapazitätsänderung erfasst und in eine Bewegungsinformation umgewandelt wird. Ferner bezieht sich die Erfindung auf eine Vorrichtung zur Durchführung des Verfahrens.

Im Rahmen der Verbrauchserfassung, insbesondere bei Wasser- oder Wärmemengenzählern, wird die Bewegung des strömenden Mediums erfasst und in eine Volumenzählung umgesetzt. Hierbei werden herkömmlicherweise verschiedenste, beispielsweise auch optische oder induktive Verfahren eingesetzt, um die Strömung zu messen. Kapazitive Messmethoden gehen von folgenden physikalischen Grundlagen aus:

Als Kapazität C bezeichnet man das Verhältnis der auf zwei ungleichartig geladene, voneinander beabstandete Körper (Kondensator) aufgebrachten Ladungsmenge Q zu der zwischen diesen beiden Körpern herrschenden elektrischen Spannung U. Beim kapazitiven Abtasten wird ausgenutzt, dass die Kapazität nicht nur von der Form und der Anordnung des Kondensators sondern auch von dem zwischen den beiden Körpern angeordneten Material abhängt. Das Maß für die Abhängigkeit wird durch die Permittivitätszahl des Dielektrikums beschrieben ($\varepsilon_r=1$ für Vakuum oder Luft, typischerweise $\varepsilon_r=2...5$ für Kunststoffe etc., $\varepsilon_r$ bis zu 4000 für Keramiken und $\varepsilon_r=0$ für leitende Materialien). Durch kapazitives Abtasten, d.h. durch Messen der Kapazität eines Kondensators und Vergleich mit bestimmten Referenzwerten, kann daher einfach und sicher festgestellt werden, ob sich ein dielektrisches oder elektrisch leitendes Medium zwischen den Körpern des Kondensators befindet oder nicht.

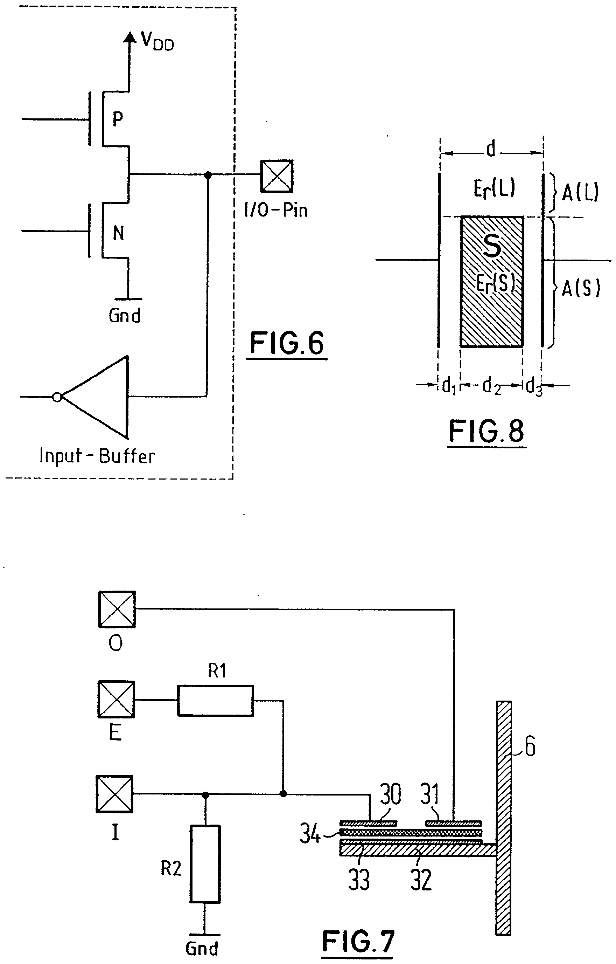

Häufig ist der Kondensator als Plattenkondensator mit zwei voneinander beabstandeten Platten der Fläche A ausgebildet, welche in einem Abstand d voneinander angeordnet sind (vgl. Fig. 8). Dann ergibt sich für die Kapazität C des Plattenkondensators die einfache Beziehung

$$C\,(\epsilon_r, A, d) = \frac{\epsilon_0 \;\; \epsilon_r \;\; A}{d}\;,$$

wobei $\varepsilon_0$ die elektrische Feldkonstante ist. Durch vollständiges Ausfüllen des Zwischenraums zwischen den beiden Platten des Kondensators mit einem Dielektrikum der Permittivitätszahl $\varepsilon_r$ lässt sich die Kapazität C des Kondensators somit um einen Faktor $\varepsilon_r$ vergrößern. Umgekehrt verschwindet die Kapazität, wenn leitendes Material ($\varepsilon_r=0$) in den Kondensator eingebracht wird. Da die Permittivitätszahl für herkömmliche Kunststoffe bereits bis ca. $\varepsilon_r = 5$, bei Keramiken gar bis $\varepsilon_r=4000$ reicht, ist die Kapazitätsänderung im Vergleich zu einem mit Luft gefüllten Kondensator leicht nachweisbar.

Wenn das Material S, wie in Fig. 8 angedeutet, nur teilweise zwischen die Platten des Plattenkondensators eingeführt ist, ergibt sich die Kapazität des Kondensators aus:

$$C = C\,(\epsilon_r(L),\;A(L), d) + \frac{1}{C(\epsilon_r(L), A(S), d_1+d_3)} + \frac{1}{C(\epsilon_r(S), A(S), d_2)}$$

$$= \frac{\epsilon_0 \;\epsilon_r(L)\; A(L)}{d} + \frac{\epsilon_0\epsilon_r\,(L)\; A(S)}{d_1 + d_3} + \frac{\epsilon_0\epsilon_r(S)\; A\,(S)}{d_2}$$

Wenn es sich um ein leitendes Material S handelt, ist $\varepsilon_r(S) = 0$ und der letzte Summand in der Gleichung fällt weg.

Die proportionale Abhängigkeit der Kapazität C von der Permittivitätszahl $\varepsilon_r$ bleibt für andere Kondensatoranordnungen erhalten, auch wenn die Abhängigkeit von Form und Anordnung der voneinander beabstandeten Kondensatorkörper nicht mehr analytisch gefasst werden kann.

Diese allgemeinen physikalischen Gesetze liegen der aus der DE 43 14 819 A1 bekannten kapazitiven Sensoreinrichtung für strömende Medien in Form eines Zylinderkondensators zugrunde, bei welchem das rohrartige Sensorgehäuse als erste Elektrode und ein in axialer Richtung in den Strömungsbereich des Mediums hineinragender elektrischer Leiter als zweite Elektrode vorgesehen sind, so dass die Flüssigkeit zwischen beiden Elektroden in axialer Richtung strömt und im Vergleich mit einem leeren Zylinderkondensator eine nachweisbare Kapazitätsänderung bewirkt. Aufgrund des langen Strömungsweges des Mediums im Zylinderkondensator können zwar Zustandsänderungen, Partikel oder Dampfblasen nachgewiesen werden, allerdings ist eine Quantifizierung der Strömung nicht möglich.

Nach ähnlichem Prinzip, allerdings mit einer anderen Elektrodenanordnung, arbeitet ein elektrostatischer Sensor, der aus der DE 196 01 551 A1 bekannt ist, bei welchem der Durchgang eines Körpers durch die Kondensatoranordnung durch Änderung der Kapazität des Kondensators erfasst werden kann. Ein solcher Sensor eignet sich zwar für das ereignisweise Zählen des Durchgangs eines kapazitiven Körpers an einer bestimmten Stelle, ist jedoch für eine quantitative Bestimmung des Bewegungszustandes nicht geeignet. Insbesondere bei der Messung von Strömungen müssten dem strömenden Medium sogar dielektrische Körper hinzugefügt werden, um die Kapazitätsänderung und damit die Bewegung des Mediums nachweisen zu können.

Aus der EP 0 608 475 A2 ist ein kapazitiver elektromagnetischer Durchflussmesser bekannt, welcher die Flussrate unabhängig von der Geschwindigkeitsverteilung misst. Dazu ist an der Innenfläche eines elektrisch isolierten Durchflussrohres ein Paar von Detektorelektroden angebracht. Bei der Bestimmung des Flusses durch Messung der Kapazität an den Elektroden wird senkrecht zur Achse des Durchflussrohres ein Magnetfeld angelegt. Die Länge jeder Elektrode in axialer Richtung des Durchflussrohres ist so eingestellt, dass sie sich proportional zu dem Kosinus eines Winkels zwischen einer Linie senkrecht zu einer Wandung des Durchflussrohres und einer sowohl zur Achse des Durchflussrohres als auch zum Magnetfeld senkrecht verlaufenden Achse verhält.

Ferner ist aus der DE-OS 1 931 543 ein Messgerät zum Messen von Gasen und Flüssigkeiten bekannt, bei dem ein in dem Strom des zu messenden Mediums auf einer Welle angeordnetes Turbinenrad den Fluss des Mediums erfasst. Auf der Welle des Turbinenrades ist ferner eine Steuerscheibe angeordnet, die sich bei jedem Umlauf des Turbinenrades an einem Element vorbei bewegt, das einen frequenzbestimmenden Teil eines Oszillators beeinflusst und dessen Induktivität und/oder Kapazität ändert.

Die DE 36 12 714 C2 zeigt einen ähnlichen Durchflussmengenmesser, bei dem als Messelement eine Flügelwalze vorgesehen ist, die von dem fließenden Medium angetrieben wird und dabei ein an der Flügelwalze angeordnetes Steuerelement an in dem Gehäuse des Durchflussmengenmessers vorgesehenen Elektroden vorbeiführt. Die Elektroden stehen mit dem fließenden Medium in direktem Kontakt, so dass als Messsignal für die sich drehende Flügelwalze eine Änderung des elektrischen Widerstands zwischen den Elektroden genutzt wird. Durch die Verlagerung der Steuerelemente sind auch Veränderungen der wirksamen Kapazität feststellbar. Der Nachweis der Widerstands- oder Kapazitätsänderung erfolgt durch Verstimmung eines elektronischen Oszillators.

Aus der US 4,164,866 ist eine Messeinrichtung zur Messung des Flusses eines Fluids mit Drehrichtungserkennung bekannt, bei der das Rotorblatt eines von dem Fluid angetriebenen Rotors eine Elektrode eines Kondensators bildet und die andere Elektrode des Kondensators aus einem in der Gehäusewand angeordneten, dreieckigen Nachweiselement besteht. Wenn sich der Rotor dreht, wird so ein sich zyklisch ändernder Kondensator gebildet, dessen Kapazitätswert in Abhängigkeit von der Drehrichtung des Rotorblatts über das dreieckige Nachweiselement von einem Maximalwert abfällt oder zu einem Maximalwert hin ansteigt. Die Kapazitätsmessung selbst erfolgt über ein durch den Kapazitätsverlauf amplitudenmoduliertes, hochfrequentes Signal.

Bei den drei letztgenannten Entgegenhaltungen ist die nachweisbare Kapazitätsänderung allerdings vergleichsweise klein und wird über eine u.a. durch die Kapazitätsänderung hervorgerufene Frequenzänderung eines Oszillators gemessen. Eine dazu geeignete Nachweiseinrichtung ist jedoch aufwendig und häufig aufgrund einer im Oszillator vorhandenen Induktivität durch äußere Magnetfelder beeinflussbar.

Aufgabe der Erfindung ist es, ein Verfahren und eine Vorrichtung zur Bewegungsmessung vorzuschlagen, bei dem die zu messende Bewegung eines strömenden Mediums durch kapazitives Abtasten in einer einfachen Messung quantitativ genau bestimmt werden kann. Ferner wird eine hohe Funktionssicherheit angestrebt.

Diese Aufgabe wird bei einem Verfahren der eingangs genannten Art mit den Merkmalen des Anspruchs 1 gelöst, wobei die Kapazität durch Übertragung von Spannungspulsen bestimmt wird.

Aus der Periode der durch das Schaltelement in der Kondensatoranordnung bewirkten Kapazitätsänderung kann auf die Geschwindigkeit des Schaltelementes und damit auf die Geschwindigkeit bzw. das Volumen des das Schaltelement antreibenden Mediums präzise zurückgeschlossen werden. Weil das Schaltelement die zu messende Bewegung direkt, vorzugsweise proportional, aufnimmt und in einen periodischen Bewegungsablauf umsetzt, werden Messungenauigkeiten aufgrund einer eher zufälligen Verbindung zwischen zu messendem Bewegungszustand und nachweisbarer Kapazität, bspw. durch Blasenbildung in dem strömenden Medium, zuverlässig vermieden. Dabei muß die periodische Bewegung des Schaltelementes nicht unbedingt direkt proportional zu der Bewegung des zu messenden Körpers oder Fluids sein, sondern kann entsprechend übersetzt werden, um eine an den jeweiligen Messzweck angepasste Messgenauigkeit erreichen zu können.

Im Gegensatz zu ebenfalls bekannten optischen Messmethoden ist das kapazitive Abtasten fremdlichtunempfindlich. Zudem besteht für die Abtastung nur ein geringer Energiebedarf, weil pro Abtastvorgang nur die Ladung eines Kondensators im Pikofarad-Bereich benötigt wird. Da bei der Messung keine Reibungs- oder Bremskräfte auftreten, ist die Abtastung nahezu rückwirkungsfrei. Ebenfalls bekannte induktive Messverfahren werden durch äußere Magnetfelder zum Teil erheblich beeinflußt, was zu großen Messungenauigkeiten führen kann. Das kapazitive Abtasten mittels eines sich periodisch bewegenden Schaltelementes ist dagegen auf äußere Magnetfelder nicht sensitiv, weil die Permittivitätszahl des Schalt-elementes davon unabhängig ist. Darüber hinaus lässt sich das Verfahren mit einer Vielzahl unterschiedlicher Schaltelemente und Kondensatoranordnungen durchführen, wodurch einerseits eine hohe konstruktive Flexibilität erreicht und andererseits eine kostengünstige Realisierung möglich ist.

Die jeweils vorliegende Kapazität wird erfindungsgemäß durch Übertragung von Spannungspulsen bestimmt. Die Ladezeit einer Kondensatoranordnung lässt sich bestimmen, indem die Kondensatorkörper ggf. über einen Widerstand mittels einer Steuereinheit schaltbar mit einer Spannungsquelle verbunden werden, so dass durch den fließenden Strom Ladung auf die Kondensatorkörper verbracht wird. Mit steigender Ladungsmenge auf den Kondensatorkörpern steigt die gemessene Spannung zwischen diesen Körpern. Durch Messen der Zeit vom Beginn des Ladeprozesses bis zum Erreichen einer Schwellspannung wird die Ladezeit bestimmt, die der Kapazität direkt proportional ist. Entsprechendes gilt für die Messung der Entladezeit. Für eine realistische Größe der zu verwendenden Kondensatoranordnungen kann von einer kleinen Kapazität im Bereich von Pikofarad ausgegangen werden. Durch Verwendung eines hochohmigen Widerstandes im Megaohm-Bereich kann eine typische Lade- bzw. Entladezeit in der Größenordnung von Mikrosekunden erreicht werden. Durch Veränderung des Widerstandes ist die Lade- bzw. Entladezeit der Kondensatoranordnung an die jeweiligen Erfordernisse anpassbar.

verwenden. Die Herstellung dieser Geräte ist mit der Erfindung kostengünstig möglich.

standes ist die Lade- bzw. Entladezeit der Kondensator anordnung an die jeweiligen Erfordernisse anpassbar.

Besonders einfach ist es, die Bewegung des strömenden Mediums in eine Drehbewegung des Schaltelementes umzusetzen, wobei das Schaltelement und möglicherweise auch die Kondensatoranordnung bezüglich des Kapazitätsverlaufs asymmetrisch ausgebildet sind. Durch eine Rotation des bezüglich der Drehachse asymmetrisch angeordneten Schaltelementes ist eine besonders einfach zu realisierende periodische Bewegung durch die Kondensatoranordnung hindurch realisierbar. Dabei kann das Schaltelement bezüglich seiner Massenverteilung symmetrisch zur Drehachse angeordnet sein, um besonders bei hohen Drehzahlen Vibrationen und Lagerverschleiß an der Drehachse aufgrund eines exzentrischen Schwerpunktes zu vermeiden. Allerdings ist es auch denkbar, durch eine entsprechende mechanische Umsetzung auch eine andere periodische Bewegung des dielektrischen Schaltelementes zu erreichen, bspw. in Form einer linearen Hin- und Herbewegung oder einer Pendelbewegung.

Bei einer besonders bevorzugten Ausgestaltung der Erfindung wird aus dem Verlauf der Kapazitätsänderung die Bewegungsrichtung des Schaltelementes abgelesen. Dazu können bspw. bei einigermaßen konstanter Drehzahl und asymmetrischem Kapazitätsverlauf zunächst die zeitlichen Abstände zwischen Kapazitätsmaxima und/oder -minima ermittelt werden. Lassen die ermittelten Abstände den Rückschluss auf eine einigermaßen gleichförmige Bewegung des Schaltelements zu, können gespeicherte Zwischenwerte gemessener Kapazitäten herangezogen werden, um den Kapazitätsverlauf zwischen zwei Kapazitätsmaxima bzw. -minima zu ermitteln. Der Verlauf der Kapazitätsänderung gibt dann Aufschluss über die Drehrichtung.

Ebenso können die Kapazitätswerte zweier benachbarter Kondensatorsegmentanordnungen in ihrer zeitlichen Abfolge überprüft werden, um daraus die Bewegungsrichtung des Schaltelements und darüber des zu messenden Mediums zu ermitteln. Diese erfindungsgemäße Variante des Verfahrens hat den Vorteil, dass auch bei einer nicht gleichförmigen Bewegung des Schaltelements eine zuverlässige Richtungserkennung möglich ist, da für die Information nicht allein die Auswertung des Kapazitätsverlaufs über die Zeit, sondern über Zeit und Ort ausschlaggebend ist. Dabei ist das Schaltelement vorzugsweise so breit, dass es zeitweilig beide Kondensatorsegmente zumindest teilweise abdeckt.

In Abwandlung des erfindungsgemäßen Verfahrens können anstelle eines Schaltelementes mehrere gleiche oder unterschiedliche Schaltelemente in einer Schaltelementanordnung periodisch durch die Kondensatoranordnung hindurchgeführt werden. Auf diese Weise kann die Frequenz der Kapazitätsänderung erhöht werden, um in optimaler Weise an die Geschwindigkeit der Bewegung des Schaltelementes angepasst zu werden. Durch Verkürzung der Periode zwischen zwei Kapazitätsänderungen wird die Messgenauigkeit erhöht, solange die Dauer einer Periode in etwa der Messzeit zur Bestimmung der Kapazität entspricht. Beispielsweise kann das Schaltelement als eine Art Zahnrand ausgebildet sein, dessen N Zähne durch eine Kondensatoranordnung geführt werden, um die Erkennung von ganzen Umdrehungen (360°) auf Bruchteile von Umdrehungen (360°/N) zu reduzieren. Mit einer asymmetrischen Anordnung mehrerer Schaltelemente, bspw. durch eine unregelmäßige Verteilung der Schaltelemente, durch verschiedene Schaltelemente mit unterschiedlicher Kapazität oder dgl., kann auch eine einfache und zuverlässige Drehrichtungserkennung erreicht werden. Dabei kann auch eine Kondensatoranordnung aus mehreren Kondesatoren, bspw. eine Kondensatorsegmentanordnung, verwendet werden.

Besonders vorteilhaft lässt sich das Verfahren zur Volumenmessung bei Wasserzählern, Wärmemengenzählern und dgl. Ferner bezieht sich die Erfindung auf eine Vorrichtung zur Durchführung des oben beschriebenen Verfahrens mit einem drehbar gelagerten, dielektrischen oder elektrisch leitenden Schaltelement zur Aufnahme der Bewegung eines strömenden Mediums und mit einer Messanordnung mit den Merkmalen des Anspruchs 6, durch die das Schaltelement von dem strömenden Medium angetrieben periodisch durchführbar ist, wobei eine Kondensatoranordnung als Messanordnung und eine Messeinrichtung zur Erfassung einer Kapazitätsänderung durch Übertragung von Spannungspulsen dienen. Bei der Messung durch Übertragung von Spannungspulsen besteht die Kondensatoranordnung aus mindestens zwei planar nebeneinander angeordneten Kondensatorplatten, und das Schaltelement ist als die Kondensatorplatten abdeckende, elektrisch leitende Schicht ausgebildet. Eine solche Anordnung bietet eine besonders flache Kondensatoranordnung. Zur Erhöhung der Kapazität der Anordnung kann dann auf den Kondensatorplatten ein Dielektrikum angeordnet sein.

Gemäß einer besonders bevorzugten Ausführungsform der Erfindung sind das Schaltelement und möglicherweise auch die Kondensatoranordnung asymmetrisch zur Drehachse des Schaltelements ausgebildet, so dass die Bewegungsrichtung genau feststellbar ist. So zeigt der Verlauf der Kapazität der Kondensatoranordnung als Funktion der Bewegung des Schaltelementes unsymmetrische Charakteristika bezüglich des Maximums, welche in der Messeinrichtung festgestellt und in eine Richtungsinformation umgewandelt werden können.

Hierzu ist das Schaltelement als vorzugsweise exzentrisch gelagerte Platte ausgebildet. Mit einem solchen Schaltelement lässt sich der Innenraum in einem Kondensator, insbesondere einem Plattenkondensator, nahezu vollständig ausfüllen, wenn es durch den Kondensator hindurchgeführt wird. Wenn die Platte exzentrisch gelagert ist, ist während der periodischen Bewegung vorzugsweise auch eine Position vorgesehen, in der das dielektrische Schaltelement vollständig außerhalb des Kondensators angeordnet ist. Auf diese Weise ist die Kapazitätsänderung besonders groß und daher einfach nachweisbar. Erfindungsgemäß kann das Schaltelement auch als im Kreismittelpunkt gelagerte Halbkreisscheibe, vorzugsweise mit asymmetrischem Randbereich, als Schnecke oder als geschlitzte Scheibe, vorzugsweise mit unterschiedlich langen Schlitzen oder Zähnen, als um den Achsmittelpunkt gelagerte Kreissegmentscheiben, vorzugsweise sich gegenüberliegende Viertelscheiben, oder als Schaltelement variabler Materialdicke ausgebildet sein. Dabei können durch in Bezug auf die Massenverteilung rotationssymmetrisch gelagerte Schaltelemente insbesondere bei hohen Drehzahlen Vibrationen und Lagerverschleiß verhindert werden. Bei einer Scheibe mit unterschiedlich großen Zähnen stellt sich für jeden Zahn, der durch die Kondensatoranordnung hindurchgeführt wird, ein anderes Kapazitätsmaximum ein, so dass jedes Kapazitätsmaximum einer Drehwinkelposition entspricht. Bei einem Schaltelement mit 12 Zähnen lässt sich so eine Drehwinkelauflösung von 30° erreichen. Zusätzlich kann durch die asymmetrischen Schaltelemente deren Drehrichtung ermittelt werden.

Gemäß einer weiteren Ausführungsform kann das Schaltelement aus einem oder mehreren dielektrischen oder elektrisch leitenden Materialien, insbesondere Kunststoffen oder Keramiken, mit einer oder verschiedenen Permittivitätszahlen hergestellt sein, um auf diese Weise einen asymmetrischen Kapazitätsverlauf als Funktion der Bewegung des Schaltelementes zu erreichen.

Ebenso ist denkbar, anstelle eines Schaltelementes mehrere gleiche oder unterschiedliche Schaltelemente in einer Schaltelementanordnung vorzusehen, so dass jeder Position der Schaltelementanordnung ein bestimmtes, vorher definiertes Tupel (Paar) von Kapazitätswerten entspricht, aus dem auf die Position des Schaltelements zurückgeschlossen werden kann. Aus der Abfolge der Tupel von Kapazitätswerten kann auch die Bewegungsrichtung der Schaltelemente ermittelt werden.

Wenn das strömende Medium nicht direkt auf das Schaltelement einwirken soll, ist erfindungsgemäß vorgesehen, dass das Schaltelement mit einem durch die Bewegung des zu messenden strömenden Mediums angetriebenen Antriebselement verbunden ist, das die Bewegung des strömenden Mediums auf das Schaltelement überträgt. Insbesondere bei Verwendung der Vorrichtung als Strömungsmesser, bspw. als Wasserzähler oder Wärmemengenzähler, kann das Antriebselement als axial gelagertes Flügelrad ausgebildet sein, welches so in einem Strömungskanal angeordnet ist, dass es von der strömenden Flüssigkeit gedreht wird und diese Drehbewegung auf das Schaltelement überträgt. Bei anderen Anwendungsmöglichkeiten, bspw. als Tachometer oder Entfernungsmesser bei einer linearen Bewegung, kann das Antriebselement auch als Rad, Zahnrad oder dgl. ausgebildet sein.

Je nach Geschwindigkeit der aufzunehmenden Bewegung kann das Antriebselement mittels einer Übersetzungseinrichtung, bspw. eines Getriebes, mit dem Schaltelement verbunden sein. Durch die Übersetzung ist es möglich, die Geschwindigkeit des dielektrischen Schaltelementes an die gewünschte Messgenauigkeit anzupassen.

Die Kondensatoranordnung ist aus einem oder mehreren, elektrisch voneinander getrennten Kondensatoren aufgebaut. Bei mehreren Kondensatoren stehen gleichzeitig mehrere gemessene Kapazitätswerte zur Verfügung, aus deren Kombination in besonders einfacher Weise eine Positionsangabe des Schaltelementes gewonnen werden kann. Aus der zeitlichen Abfolge der Kapazitäten zweier vorzugsweise benachbarter Kondensatoren kann darüber hinaus die Bewegungsrichtung des Schaltelements ermittelt werden.

Weiterbildungen, Vorteile und Anwendungsmöglichkeiten der Erfindung ergeben sich auch aus der nachfolgenden Beschreibung von Ausführungsbeispielen und der Zeichnung.

Es zeigen:

Fig. 1        eine schematische, dreidimensionale Ansicht einer Vorrichtung aus dem Stand der Technik zur Bewegungsmessung durch kapazitives Abtasten,

Fig. 2            eine Draufsicht auf eine Ausführungsform eines Schaltelementes sowie eine entsprechende Kondensatoranordnung,

Fig. 3            einen Querschnitt durch eine als Strömungsmesser ausgebildete Vorrichtung aus dem Stand der Technik,

Fig. 4a bis 4d    Schaltungsanordnungen zur Bestimmung der Kapazität,

Fig. 5            schematisch eine weitere Vorrichtung aus dem Stand der Technik mit zwei Schaltelementen,

Fig. 6            ein vereinfachtes Schema eines I/O-Pins zur Verwendung mit einer erfindungsgemäßen Vorrichtung,

Fig. 7            schematisch eine erfindungsgemäße Vorrichtung mit planar angeordneten Kondensatorplatten, und

Fig. 8            schematisch eine Seitenansicht eines Plattenkondensators aus dem Stand der Technik mit einem darin angeordneten Material S.

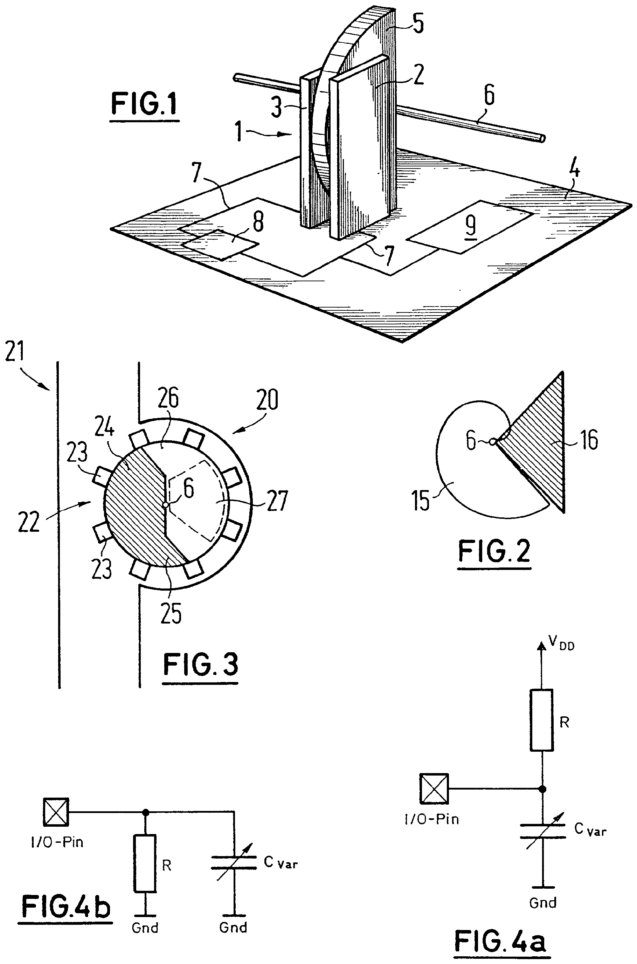

Bei der in Fig. 1 dargestellten Ausführungsform handelt es sich um eine Vorrichtung aus dem Stand der Technik, der das Verständnis der Erfindung erleichtert. Bei der Vorrichtung zur Bewegungsmessung durch kapazitives Abtasten ist eine Kondensatoranordnung 1 vorgesehen, mit einer ersten Platte 2 und einer zweiten Platte 3, welche beabstandet voneinander parallel auf einer Grundplatte 4 angeordnet sind. Zwischen die erste Platte 2 und die zweite Platte 3 der Kondensatoranordnung 1 ist ein dielektrisches oder elektrisch leitendes Schaltelement 5 in Form einer Halbkreisscheibe einführbar. Im Kreismittelpunkt ist das dielektrische Schaltelement 5 auf einer Drehachse 6 angeordnet, die durch die Bewegung eines zu messenden Körpers, Fluids oder dgl. strömenden Mediums angetrieben werden kann und das Schaltelement 5 periodisch zwischen den Platten 2, 3 der Kondensatoranordnung hindurchführt. Die Drehachse 6 kann die Achse eines Flügelrades sein, welches von einer strömenden Flüssigkeit angetrieben wird. Bei Erfassung einer linearen Bewegung bspw. eines Autos kann die Drehachse 6 auch die Achse eines Rades oder Zahnrades sein. Ebenso ist es möglich, dass ein strömendes Medium direkt auf das Schaltelement 5 einwirkt.

Auf der Grundplatte 4 sind elektrische Anschlüsse 7 zu den Platten 2, 3 der Kondensatoranordnung 1 vorgesehen, welche schaltbar mit einer Spannungsquelle 8 verbunden sind. Durch Anlegen einer Spannung werden entgegengesetzt geladene Ladungsträger auf die erste Platte 2 und die zweite Platte 3 der Kondensatoranordnung 1 gebracht, wodurch sich zwischen beiden Platten 2, 3 eine Spannung aufbaut, welche der Kapazität der Kondensatoranordnung 1 proportional ist. In einem Messelement 9 wird die Ladezeit bis zum Erreichen einer Schwellenspannung gemessen und daraus die Kapazität bestimmt. Analog ist es möglich, die Entladezeit der Kondensatoranordnung 1 nach Abschalten der Spannungsquelle 8 zu bestimmen.

Wenn die Drehachse 6 angetrieben wird, wird ein dielektrisches Schaltelement 5 aus der dargestellten Position zwischen den Platten 2, 3 der Kondensatoranordnung 1 herausbewegt, und die Kapazität der Kondensatoranordnung 1 verringert sich. Diese Veränderung der Kapazität wird durch das Messelement 9 erfasst. Bei andauernder Bewegung wechseln sich hohe und niedrige Kapazitätswerte periodisch ab, wobei aus der Länge der jeweiligen Periode auf die Geschwindigkeit der Bewegung zurückgeschlossen werden kann. Bei einer Volumenmessung, bspw. in einem Wasserzähler oder dgl., ist es ausreichend, die Anzahl der Kapazitätsänderungen zwischen niedrigen und hohen Kapazitätswerten zu zählen, die vollständigen Umdrehungen des Schaltelementes 5 entspricht, so dass nach einer entsprechenden Eichung das durch einen Messzähler geströmte Volumen bestimmt werden kann.

Fig. 2 zeigt eine andere Ausführungsform eines plattenartigen Schaltelementes 15 aus dem Stand der Technik, welches schneckenförmig ausgebildet ist. Im Zentrum der Schnecke ist das Schaltelement 15 mit der senkrecht dazu angeordneten Drehachse 6 verbunden. Durch Drehung der Drehachse 6 wird das Schaltelement 15 durch eine Kondensatoranordnung hindurchgeführt, von welcher nur der obere Kondensatorkörper 16 dargestellt ist. Auf der anderen Seite des Schaltelementes 15 wird die Anordnung von einem gleichen Kondensatorkörper ergänzt. Der Kondensatorkörper 16 ist als Kreissegment ausgebildet, welches radial zur Drehachse 6 angeordnet ist. Durch die schneckenförmige Ausbildung wird ein asymmetrischer Kapazitätsverlauf erreicht, der sich besonders zur Drehrichtungserkennung eignet.

Fig. 3 zeigt eine als Wasserzähler ausgebildete Vorrichtung aus dem Stand der Technik zur Bewegungsmessung, welche in einer Ausbuchtung 20 eines Rohres 21 angeordnet ist. In der Ausbuchtung 20 ist ein Flügelrad 22 mittels einer Drehachse 6 derart drehbar gelagert, dass die an dem Außenumfang des Flügelrades 22 vorspringenden Flügel 23 bis in das Rohr 21 vorragen, so dass sie von einer Strömung in dem Rohr 21 weggedrückt werden, wobei sich das Flügelrad 22 um die Drehachse 6 dreht. Im Inneren des Flügelrades 22 ist ein dielektrisches Schaltelement 24 angeordnet, welches im wesentlichen als Halbkreisscheibe ausgebildet ist, wobei es an seinem einen Rand eine vorspringende Kante 25 und an seinem gegenüberliegenden Rand eine Aussparung 26 aufweist. Bei einer Drehung des Flügelrades 22 wird das dielektrische Schaltelement 24 durch eine Kondensatoranordnung 27 hindurchbewegt, wobei die Kapazitätsänderung auf die oben beschriebene Weise nachgewiesen wird. Aufgrund der unsymmetrischen Ausbildung des dielektrischen Schaltelements 24 mit Kante 25 und Aussparung 26 kann die Bewegungsrichtung des Flügelrades festgestellt werden, weil aufgrund der Form des dielektrischen Schaltelementes 24 der Gradient der Kapazitätsänderung beim Eintritt des Schaltelementes 24 in die Kondensatoranordnung 27 je nach Drehrichtung unterschiedlich ist.

Die Figuren 4a und 4b zeigen Schaltungen zur Messung der Lade- bzw. Entladezeit der Kondensatoranordnung 1, 16, 27, wie sie in dem schematisch dargestellten Messelement 9 realisiert sein können. Zur Messung der Ladezeit (Fig. 4a) ist ein Kondensatorkörper der Kondensatoranordnung $C_{Var}$ mit dem Erdpotential Gnd, der andere Kondensatorkörper über einen Widerstand R mit einer anschaltbaren Spannungsquelle $V_{DD}$ verbunden. Zwischen der Kondensatoranordnung $C_{Var}$ und dem Widerstand R ist ein zu einem Microkontroller führender Ein-/Ausgangs-Pin (I/O-Pin) angeordnet, der die Ladezeit der Kondensatoranordnung $C_{var}$ bis zum Erreichen einer Schwellenspannung bestimmt. Entsprechendes gilt für die Bestimmung der Entladezeit (Fig. 4b), wobei der Widerstand R in diesem Fall nicht mit einer Spannungsquelle $V_{DD}$ sondern mit dem Erdpotential Gnd verbunden ist. Bei einer typischen Kapazität $C_{Var}$ im Bereich von Pikofarad und einem Widerstand R im Bereich von Megaohm kommt es zu einer Entladezeit im Bereich von Mikrosekunden.

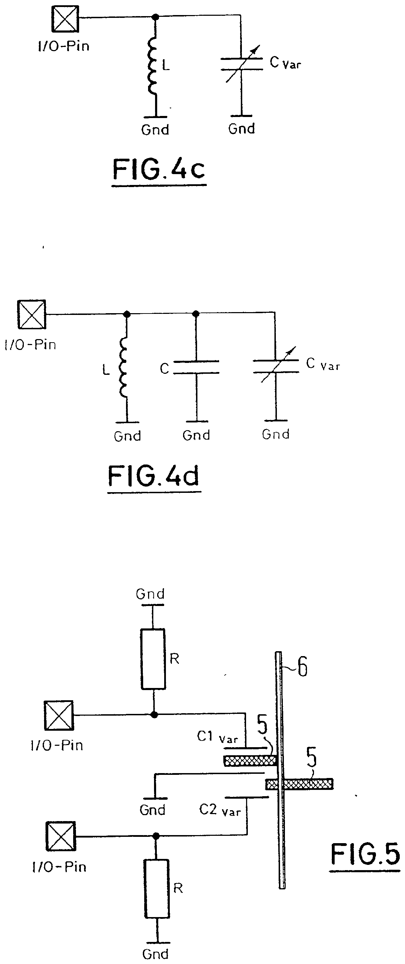

Durch Austauschen des Widerstandes R gegen eine Spule L kann anstelle der Entladezeit auch die Frequenz des so bestimmten Schwingkreises bestimmt werden (Fig. 4c). Allerdings ergeben sich gemäß

$$f_R = \frac{1}{2\pi} \cdot \sqrt{\frac{1}{L \cdot C}}$$

bei einer Kapazität $C_{Var}$ im Bereich von Pikofarad und einer Spule L (Induktivität) bei etwa 0.1 bis 1 mH resultierende Frequenzen im Bereich mehrerer Megahertz. Derart hohe Frequenzen sind von langsamen Mikrokontrollern unter Umständen nicht mehr erfassbar.

Durch Hinzuschalten einer parallel zur Spule L angeordneten Referenzkapazität C, wie in Fig. 4d gezeigt, ist es möglich, die Frequenzverstimmung des Schwingkreises im Bereich einiger 100 Hz zu messen. Beispielsweise ergibt sich bei einer Induktivität L = 1 mH und einer Referenzkapazität C = 1 nF eine in einem Mikroprozessor nachweisbare Frequenzabnahme von ca. 400 Hz. Allerdings sollten die Referenzkapazität C und die zu bestimmende Kapazität $C_{Var}$ in einer ähnlichen Größenordnung liegen, da sonst die Frequenzunterschiede unterhalb der Nachweisgrenze liegen.

Fig. 5 zeigt schematisch eine aus dem Stand der Technik bekannte Anordnung aus zwei Kondensatoranordnungen $C1_{Var}$ und $C2_{Var}$ mit einer gemeinsamen mittleren Kondensatorplatte, die mit dem Erdpotential Gnd verbunden ist, sowie zwei äußeren Kondensatorplatten, an denen je eine Schaltung zur Messung der Entladezeit gemäß Fig. 4b angeschlossen ist. An einer Drehachse 6 sind zwei Schaltelemente 5 im Winkel zueinander versetzt angeordnet. Durch Verknüpfung zweier gleichzeitig gemessener Kapazitätswerte kann ein Drehwinkel eindeutig dekodiert werden, da jedes Paar gemessener Kapazitäten genau einem Winkel zugeordnet werden kann. Außerdem kann die Drehrichtung ermittelt werden.

Ein vereinfachtes Schema eines I/O-Pins zur Verwendung in einer Schaltung gemäß der Fig. 4 und 5 ist in Fig. 6 dargestellt.

In Fig. 7 ist eine erfindungsgemäße Vorrichtung zum kapazitiven Abtasten mit einer Schaltungsanordnung schematisch dargestellt, bei der zwei Kondensatorplatten 30, 31 auf der gleichen Ebene angeordnet sind. Um eine Bewegung zu detektieren, wird eine auf einem beweglichen Träger 32 befindliche leitende Schicht 33 bei Bewegung der Drehachse 6 beabstandet über die Kondensatorplatten 30, 31 geführt, die dann schaltungstechnisch eine Anordnung aus zwei in Serie geschalteten Kondensatoren ergeben. Um die Kapazität der Anordnung zu erhöhen, kann auf die bspw. aus Kupfer bestehenden und auf einer Platine angeordneten Kondensatorplatten 30, 31 ein Dielektrikum 34 aufgebracht werden.

Zur Messung der Kapazität schaltet eine nicht dargestellte Steuereinheit den Enable-Eingang E, der zuvor auf ein Erdpotential Gnd geschaltet war, auf ein hohes Potential, damit über die Widerstände R1 und R2 keine Querströme fließen, die eine als Spannungsquelle dienende Batterie schnell entleeren würden. Am Eingang I liegt dann über den aus den Widerständen R1 und R2 gebildeten Spannungsteiler eine Vorspannung an, die direkt bei einer Schaltspannung des Eingangs liegt. Nun gibt eine Steuereinheit am Ausgang O einen kurzen elektrischen Puls aus, der über die beiden Serienkapazitäten auf den Eingang I übertragen wird, falls sich die leitende Schicht 33 über den Kondensatorplatten 30, 31 befindet. Andernfalls ist die Restkapazität so gering, dass keine Pulsübertragung stattfindet.

Um die Funktionsfähigkeit des Messverfahrens zu gewährleisten, muss der Eingang I eine ausreichend hohe Eingangsimpedanz aufweisen. Die Widerstände R1 und R2 müssen so dimensioniert werden, dass der aus dem Widerstand R2 und der Kapazität $C_{Var}$ gebildete Hochpass im Fall überdeckter Kondensatorplatten für einen Puls am Ausgang O durchlässig und im anderen Fall undurchlässig ist.

Mit der Erfindung wird somit eine Möglichkeit geschaffen, die Bewegung insbesondere eines strömenden Mediums einfach und genau quantitativ zu bestimmen, wobei die für die Durchführung des Messverfahrens notwendige Vorrichtung nahezu wartungsfrei ist. Dies ist auch darauf zurückzuführen, dass in dem System keine großen Reibungskräfte wirken. Für die Abtastung wird nur wenig Energie benötigt. Im Gegensatz zu optischen Abtastverfahren oder der Verwendung von Reed-Kontakten oder dgl. haben äußere Faktoren wie Fremdlicht oder Magnetfelder keinen Einfluss auf die Messgenauigkeit. Darüber hinaus ist diese Vorrichtung besonders klein ausbildbar, so dass ein Gebrauch auch bei engen Platzverhältnissen möglich ist.

**Bezugszeichenliste:**

| | |
|---|---|
| 1 | Kondensatoranordnung |
| 2 | erste Platte |
| 3 | zweite Platte |
| 4 | Grundplatte |
| 5 | Schaltelement |
| 6 | Drehachse |
| 7 | elektrische Anschlüsse |
| 8 | Spannungswelle |
| 9 | Messelement |
| 15 | Schaltelement |
| 16 | Kondensatorkörper |
| 20 | Ausbuchtung |
| 21 | Rohr |
| 22 | Flügelrad |
| 23 | Flügel |
| 24 | Schaltelement |
| 25 | Kante |
| 26 | Aussparung |
| 27 | Kondensatoranordnung |
| 30, 31 | Kondensatorplatten |
| 32 | beweglicher Träger |
| 33 | leitende Schicht |
| 34 | Dieelektrikum |
| $C_{Var}$ | Kondensatoranordnung |
| Gnd | Erdpotential |
| R | Widerstand |
| $V_{DD}$ | Spannungsquelle |
| I/O-Pin | Ein-/Ausgangs-Pin |
| L | Spule |
| C | Referenzkapazität |
| E | Enable |
| I | Eingang |
| O | Ausgang |

**Patentansprüche**

1. Verfahren zur Messung der Bewegung eines strömenden Mediums durch kapazitives Abtasten eines beweglichen dielektrischen oder elektrisch leitenden Schaltelementes (33), wobei das dielektrische oder elektrisch leitende Schaltelement (33) angetrieben von der zu messenden Bewegung des strömenden Mediums periodisch durch eine Messanordnung hindurchgeführt wird und dadurch eine Kapazitätsänderung bewirkt und wobei die Kapazitätsänderung erfasst und in eine Bewegungsinformation umgewandelt wird und wobei die Messanordnung eine Kondensatoranordnung (30, 31) ist und die Kapazität durch Übertragung von Spannungspulsen bestimmt wird, **dadurch gekennzeichnet, dass** die Kondensatoranordnung aus mindestens zwei planar nebeneinander angeordneten Kondensatorplatten (30, 31) besteht, und dass das Schaltelement (33) als eine die Kondensatorplatten (30, 31) abdeckende, elektrisch leitende Schicht (33) ausgebildet ist, sodass sich schaltungstechnisch eine Anordnung aus zwei in Serie geschalteten Kondensatoren ergibt.

2. Verfahren nach Anspruch 1, **dadurch gekennzeichnet, dass** die Bewegung des strömenden Mediums in eine Drehbewegung des Schaltelementes (33) umgesetzt wird, wobei das Schaltelement (33) und die Kondensatoranordnung (30, 31) bezüglich einer Drehachse (6) des Schaltelementes (33) asymmetrisch ausgebildet sind.

3. Verfahren nach einem der vorhergehenden Ansprüche, **dadurch gekennzeichnet, dass** aus der Kapazitätsänderung der Kondensatoranordnung (30, 31) die Bewegungsrichtung des Schaltelementes (33) abgelesen wird.

4. Verfahren nach Anspruch 3, **dadurch gekennzeichnet, dass** zur Drehrichtungserkennung und/oder Drehwinkeldekodierung die Kapazitätswerte mehrerer in einer Kondensatoranordnung vorgesehener Kondensatoren in ihrer zeitlichen Abfolge überprüft werden.

5. Verfahren nach einem der vorhergehenden Ansprüche, **dadurch gekennzeichnet, dass** mehrere gleiche oder unterschiedliche Schaltelemente (33) periodisch durch die Kondensatoranordnung (30, 31) hindurchgeführt werden.

6. Vorrichtung zur Durchführung eines Verfahrens nach einem der Ansprüche 1 bis 5 mit einem drehbar gelagerten, dielektrisch oder elektrisch leitenden Schaltelement (33) zur Aufnahme der Bewegung eines strömenden Mediums und mit einer Messanordnung, durch die das Schaltelement (33) von dem strömenden Medium angetrieben periodisch durchführbar ist, wobei eine Kondensatoranordnung (30, 31) als Messanordnung vorgesehen ist, und eine Messeinrichtung zur Erfassung einer Kapazitätsänderung durch Übertragung von Spannungspulsen vorgesehen ist, **dadurch gekennzeichnet, dass** die Kondensatoranordnung aus mindestens zwei planar nebeneinander angeordneten Kondensatorplatten (30, 31) besteht und das Schaltelement als die Kondensatorplatten (30, 31) abdeckende elektrisch leitende Schicht (33) ausgebildet ist, sodass sich schaltungstechnisch eine Anordnung aus zwei in Serie geschalteten Kondensatoren ergibt.

7. Vorrichtung nach Anspruch 6, **dadurch gekennzeichnet, dass** das Schaltelement (33) und die Kondensatoranordnung (30, 31) asymmetrisch zur Drehachse (6) des Schaltelementes (33) ausgebildet sind.

8. Vorrichtung nach Anspruch 6 oder 7, **dadurch gekennzeichnet, dass** das Schaltelement (33) als exzentrisch gelagerte Platte ausgebildet ist.

9. Vorrichtung nach einem der Ansprüche 6 bis 8, **dadurch gekennzeichnet, dass** mehrere gleiche oder unterschiedliche Schaltelemente (33) in einer Schaltelementanordnung vorgesehen sind.

10. Vorrichtung nach einem der Ansprüche 6 bis 9, **dadurch gekennzeichnet, dass** das Schaltelement (33) mit einem durch die Bewegung des zu messenden strömenden Mediums angetriebenen Antriebselement (22) verbunden ist, das die Bewegung des strömenden Mediums auf das Schaltelement (33) überträgt.

11. Vorrichtung nach Anspruch 10, **dadurch gekennzeichnet, dass** das Antriebselement ein axial gelagertes Flügelrad (22), Rad, Zahnrad oder dgl. ist.

12. Vorrichtung nach Anspruch 10 oder 11, **dadurch gekennzeichnet, dass** das Antriebselement (22) mittels einer Übersetzungseinrichtung, beispielsweise eines Getriebes, mit dem Schaltelement (33) verbunden ist.

13. Vorrichtung nach einem der Ansprüche 6 bis 12, **dadurch gekennzeichnet, dass** die Kondensatoranordnung (30, 31) aus mehreren, elektrisch voneinander getrennten Kondensatoren (30, 31) aufgebaut ist.

14. Vorrichtung nach einem der Ansprüche 6 bis 13, **dadurch gekennzeichnet, dass** die Kondensatoranordnung als Plattenkondensator ausgebildet ist.

15. Vorrichtung nach einem der Ansprüche 6 bis 8 oder 9 bis 11, **dadurch gekennzeichnet, dass** auf den Kondensatorplatten (30, 31) ein Dielektrikum (34) angeordnet ist.

**Claims**

1. A method for measuring the motion of a flowing medium by capacitive scanning of a movable, dielectrically or electrically conducting switching element (33), wherein the dielectrically or electrically conducting switching element (33), driven by the motion of the flowing medium to be measured, is periodically passed through a measuring arrangement thereby causing a change in capacity, and wherein the change in capacity is detected and converted into motion information, and wherein the measuring arrangement is a capacitor arrangement (30, 31) and the capacity is determined by the transmission of voltage pulses, **characterised in that** the capacitor arrangement consists of at least two capacitor plates (30, 31) adjacently arranged in the same plane, and **in that** the switching element (33) is configured as an electrically conducting layer (33) covering the capacitor plates (30, 31) thereby resulting in a circuit arrangement consisting of two series-connected capacitors.

2. The method according to claim 1, **characterised in that** the motion of the flowing medium is converted into a rotary motion of the switching element (33), wherein the switching element (33) and the capacitor arrangement (30, 31) are configured asymmetrically with respect to a rotary axis (6) of the switching element (33).

3. The method according to one of the preceding claims, **characterised in that** the direction of motion of the switching element (33) is derived from the change in capacity of the capacitor arrangement (30, 31).

4. The method according to claim 3, **characterised in that** the direction of motion is detected and/or the rotary angle is decoded by checking the capacity values of a number of capacitors provided in a capacitor arrangement in their chronological sequence.

5. The method according to one of the preceding claims, **characterised in that** a number of identical or different switching elements (33) are passed periodically through the capacitor arrangement (30, 31).

6. A device for performing a method according to one of claims 1 to 5 comprising a rotatably mounted, dielectrically or electrically conducting switching element (33) for recording the motion of a flowing medium and with a measuring arrangement, through which the switching element (33), driven by the flowing medium, can be periodically passed, wherein a capacitor arrangement (30, 31) is used as measuring arrangement, and a measuring device is provided for detecting a change in capacity by the transmission of voltage pulses,
**characterised in that** the capacitor arrangement consists of at least two capacitor plates (30, 31) adjacently arranged in the same plane and the switching element is configured as an electrically conducting layer (33) covering the capacitor plates (30, 31), thus resulting in a circuit arrangement consisting of two series-connected capacitors.

7. The device according to claim 6, **characterised in that** the switching element (33) and the capacitor arrangement (30, 31) are configured asymmetrically to the rotary axis (6) of the switching element (33).

8. The device according to claim 6 or 7, **characterised in that** the switching element (33) is configured as an eccentrically mounted plate.

9. The device according to one of claims 6 to 8, **characterised in that** a number of identical or different switching elements (33) are provided in one switching element arrangement.

10. The device according to one of claims 6 to 9, **characterised in that** the switching element (33) is connected to a drive element (22) driven by the motion of the flowing medium to be measured, wherein the motion of the flowing medium is transmitted to the switching element (33).

11. The device according to claim 10, **characterised in that** the drive element is an axially mounted fan wheel (22), wheel, gear wheel or the like.

12. The device according to claim 10 or 11, **characterised in that** the drive element (22) is connected to the switching element (33) by means of a transmission device such as a gear.

13. The device according to one of claims 6 to 12, **characterised in that** the capacitor arrangement (30, 31) is composed of a number of capacitors (30, 31) which are electrically separated from each other.

14. The device according to one of claims 6 to 13, **characterised in that** the capacitor arrangement is configured as a plate capacitor.

15. The device according to one of claims 6 to 8, or 9 to 11, **characterised in that** a dielectric (34) is arranged on the capacitor plates (30, 31).

**Revendications**

1. Procédé de mesure du mouvement d'un milieu s'écoulant par balayage capacitif d'un élément de commutation (33) diélectrique ou électriquement conducteur mobile, dans lequel l'élément de commutation (33) diélectrique ou électriquement conducteur entraîné par le mouvement à mesurer du milieu s'écoulant est guidé périodiquement à travers un dispositif de mesure et provoque de cette manière une variation de capacité et dans lequel la variation de capacité est détectée et est convertie en une information de mouvement et dans lequel le dispositif de mesure est un dispositif de condensateur (30, 31) et la capacité est déterminée par la transmission d'impulsions de tension, **caractérisé en ce que** le dispositif de condensateur est constitué d'au moins deux plaques de condensateur (30, 31) planaires disposées côté à côté, et **en ce que** l'élément de commutation (33) est réalisé comme une couche électriquement conductrice (33) recouvrant les plaques de condensateur (30, 31), de sorte que par technique de circuits une disposition de deux condensateurs branchés en série soit obtenue.

2. Procédé selon la revendication 1, **caractérisé en ce que** le mouvement du fluide s'écoulant est converti en un mouvement rotatif de l'élément de commutation (33), dans lequel l'élément de commutation (33) et le dispositif de condensateur (30, 31) sont réalisés asymétriquement par rapport à un axe de rotatif (6) de l'élément de commutation (33).

3. Procédé selon une des revendications précédentes, **caractérisé en ce que** la direction de mouvement de l'élément de commutation (33) est lue d'après la variation de capacité du dispositif de condensateur (30, 31).

4. Procédé selon la revendication 3, **caractérisé en ce que** à des fins de reconnaissance de direction de rotation et/ou décodage d'angle de rotation, les valeurs de capacité de plusieurs condensateurs prévus dans un dispositif de condensateur sont contrôlées dans leur séquence temporelle.

5. Procédé selon une des revendications précédentes, **caractérisé en ce que** plusieurs éléments de commutation (33) identiques ou différents sont guidés périodiquement à travers le dispositif de condensateur (30, 31).

6. Dispositif pour mettre en oeuvre un procédé selon une des revendications 1 à 5 comportant un élément de commutation (33) diélectrique ou électriquement conducteur, positionné rotativement pour enregistrer le mouvement d'un fluide s'écoulant et comportant un dispositif de mesure, à travers lequel l'élément de commutation (33) peut être guidé périodiquement en étant entraîné par le milieu s'écoulant, dans lequel un dispositif de condensateur (30, 31) est prévu comme dispositif de mesure, et un dispositif de mesure pour détecter une variation de capacité par la transmission d'impulsions de tension est prévu,
**caractérisé en ce que** le dispositif de condensateur est constitué d'au moins deux plaques de condensateur (30, 31) planaires disposées côté à côté et l'élément de commutation est réalisé comme une couche (33) électriquement conductrice recouvrant les plaques de condensateur (30, 31), de sorte que par technique de circuits une disposition de deux condensateurs branchés en série soit obtenue.

7. Dispositif selon la revendication 6, **caractérisé en ce que** l'élément de commutation (33) et le dispositif de condensateur (30, 31) sont réalisés asymétriquement par rapport à l'axe de rotation (6) de l'élément de commutation (33).

8. Dispositif selon la revendication 6 ou 7, **caractérisé en ce que** l'élément de commutation (33) est réalisé comme une plaque positionnée excentriquement.

9. Dispositif selon une des revendications 6 à 8, **caractérisé en ce que** plusieurs éléments de commutation (33) identiques ou différentes sont prévus dans un dispositif d'élément de commutation.

10. Dispositif selon une des revendications 6 à 9, **caractérisé en ce que** l'élément de commutation (33) est relié avec un élément d'entraînement (22) entraîné par le mouvement du milieu s'écoulant à mesurer, qui transmet le mouvement du milieu s'écoulant à l'élément de commutation (33).

11. Dispositif selon la revendication 10, **caractérisé en ce que** l'élément d'entraînement est une hélice (22) positionnée axialement, une roue, une roue dentée ou similaire.

**12.** Dispositif selon la revendication 10 ou 11, **caractérisé en ce que** l'élément d'entraînement (22) est relié au moyen d'un dispositif de translation, par exemple une transmission, avec l'élément de commutation (33).

**13.** Dispositif selon une des revendications 6 à 12, **caractérisé en ce que** le dispositif de condensateur (30, 31) est constitué de plusieurs condensateurs (30, 31) séparés électriquement les uns des autres.

**14.** Dispositif selon une des revendications 6 à 13, **caractérisé en ce que** le dispositif de condensateur est réalisé comme un condensateur à plaques.

**15.** Dispositif selon une des revendications 6 à 8 ou 9 à 11, **caractérisé en ce qu'**un diélectrique (34) est disposé sur les plaques de condensateur (30, 31).

FIG.1

5

2

6

3

1

4

7

8

9

7

FIG.2

6

16

15

FIG.3

21

26

20

24

23

22

6

27

23

25

V$_{DD}$

R

I/O-Pin

C$_{var}$

FIG.4b

I/O-Pin

R

C$_{var}$

Gnd

Gnd

Gnd

FIG.4a

I/O-Pin

L

Gnd

C Var

Gnd

## FIG.4c

I/O-Pin

L

Gnd

C

Gnd

C Var

Gnd

## FIG.4d

Gnd

R

I/O-Pin

C1 Var

5

6

5

Gnd

C2 Var

I/O-Pin

R

Gnd

## FIG.5

14

FIG.6

FIG.8

FIG.7

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4314819 A1
- DE 19601551 A1
- EP 0608475 A2

- DE OS1931543 A
- DE 3612714 C2
- US 4164866 A